# EUROPEAN PATENT APPLICATION

(11) **EP 4 155 115 A1**
(43) Date of publication of application: **29.03.2023**
(21) Application number: 22190505.2
(22) Date of filing: 16.08.2022
(51) Int. Cl.: B60L 50/64, H01M 50/209, H01M 50/249, H01M 50/271, H01M 50/317, H01M 10/52, H01M 50/238

(54) **BATTERY PACK**

(30) Priority: 24.09.2021 JP 2021155440
(71) Applicant: TOYOTA JIDOSHA KABUSHIKI KAISHA, Aichi-Ken 471-8571 (JP)
(72) Inventor: INOUE, Shigeyuki, Toyota-shi, 471-8571 (JP); YAHARA, Tatsuma, Toyota-shi, 471-8571 (JP)
(74) Representative: D Young & Co LLP

(57) **Abstract**

A battery pack (100) includes a battery stack (2), an upper case (10) including a first main body portion (10M) and a first flange portion (15a), a lower case (20) including a second main body portion (20M) and a second flange portion (25a), and sealing material (26) included in a sealing structure between the first flange portion (15a) and the second flange portion (25a). The first main body portion (10M) includes a facing portion (11) that faces the battery stack (2) in a third direction (DR3), a non-facing portion (13) provided at a position that is on a side of the facing portion (11) with respect to a position of the first flange portion (15a) in the first direction (DR1) and that does not face the battery stack (2), and a constricting portion (12) that is provided at a position between the facing portion (11) and the non-facing portion (13) in the first direction (DR1), and of which a height position is lower than height positions of the facing portion (11) and the non-facing portion (13).

## Description

### BACKGROUND OF THE INVENTION

### 1. Field of the Invention

The present disclosure relates to a battery pack.

### 2. Description of Related Art

As disclosed in Japanese Patent No. 6772986 (JP 6772986 B), a battery stack is configured by stacking multiple battery cells. A battery pack is configured by disposing the battery stack in a housing case (enclosure). Generally, the housing case is made up of an upper case, a lower case, and a sealing material disposed therebetween (between where the upper case and lower case come together). The housing case is sealed by the sealing material being provided.

### SUMMARY OF THE INVENTION

When short-circuiting or the like occurs in a battery cell, the battery cell generates heat, and high-temperature gas is generated inside the battery cell. When the internal pressure of the battery cell exceeds a predetermined threshold value, the high-temperature gas is discharged from a release valve of the battery cell. The gas increases the internal pressure of the housing case, and travels toward the sealing material disposed between the upper case and the lower case. When the high-temperature gas comes into contact with the sealing material, the sealing material deteriorates, which in turn leads to the sealing capabilities of the sealing material declining.

The present disclosure provides a battery pack capable of suppressing deterioration of the sealing material disposed between the upper case and the lower case even when high-temperature gas is discharged from the battery cells into the battery pack.

A battery pack according to a first aspect of the present disclosure includes a battery stack including a plurality of battery cells, an upper case including a first main body portion and a first flange portion extending from the first main body portion in a first direction, a lower case including a second main body portion that defines an internal space accommodating the battery stack together with the first main body portion, and a second flange portion that extends from the second main body portion in the first direction, and sealing material that is provided between the first flange portion and the second flange portion, and that is included in a sealing structure between the first flange portion and the second flange portion. The first main body portion of the upper case includes a facing portion that faces the battery stack in a third direction from the lower case toward the upper case, a non-facing portion provided at a position that is on a side of the facing portion with respect to a position of the first flange portion in the first direction and that does not face the battery stack in the third direction, and a constricting portion provided at a position between the facing portion and the non-facing portion in the first direction, a height position of the constricting portion in the third direction being lower than a height position of the facing portion and a height position of the non-facing portion in the third direction.

In the above configuration, the constricting portion may include an inner inclined portion that connects to the facing portion and that is inclined such that a height position of the inner inclined portion in the third direction gradually decreases as a distance from the facing portion increases in the first direction, an outer inclined portion that connects to the non-facing portion and that is inclined such that a height position of the outer inclined portion in the third direction gradually decreases as a distance from the non-facing portion increases in the first direction, and a bottom portion provided between the inner inclined portion and the outer inclined portion.

In the above configuration, a height position of the bottom portion in the third direction may be lower than the height position of the facing portion and the height position of the non-facing portion in the third direction.

The battery pack may further include a pressure release valve provided on the bottom portion, and the pressure release valve may be configured to open when a pressure in the internal space exceeds a predetermined value.

In the above configuration, the height position of the non-facing portion in the third direction may be higher than the height position of the facing portion in the third direction.

In the above configuration, a height position of the first flange portion in the third direction may be higher than the height position of the facing portion in the third direction.

In the above configuration, the first flange portion may extend along a second direction orthogonal to the first direction, and a height position in the third direction of a part of the first flange portion at a middle position in the second direction may be higher than height positions in the third direction of parts of the first flange portion at positions on both end sides in the second direction.

In the above configuration, the second direction may be orthogonal to the third direction.

In the above configuration, the upper case may further include a third flange portion extending from the first main body portion in the second direction, and the height position in the third direction of the part of the first flange portion at the middle position may be higher than a height position in the third direction of the third flange portion.

In the above configuration, the first direction may be orthogonal to the third direction.

In the above configuration, the third direction may be a vertical direction.

According to the present disclosure, a battery pack is obtained that is capable of suppressing deterioration of the sealing material disposed between the upper case and the lower case even when high-temperature gas is discharged from the battery cells into the battery pack.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a disassembled perspective view illustrating a battery pack 100 according to an embodiment;
FIG. 2 is a cross-sectional view illustrating the battery pack 100 according to the embodiment, illustrating a cross-sectional structure of the battery pack 100 at a position taken along line II-II in FIG. 1;
FIG. 3 is a perspective view illustrating the battery pack 100 according to the embodiment, and is a diagram for describing a way in which deformation may occur in an upper case 10 under increase in internal pressure of a housing case 30;
FIG. 4 is a cross-sectional view taken along line IV-IV in FIG. 3, as viewed from the direction of arrows; and
FIG. 5 is a cross-sectional view illustrating a battery pack 100Z according to a comparative example, and is a diagram for describing a state inside of the housing case 30 when high-temperature gas is generated at a battery cell 1.

### DETAILED DESCRIPTION OF EMBODIMENTS

An embodiment of the present disclosure will be described in detail below with reference to the drawings. In the description of the embodiment below, parts that are the same or in common are denoted by the same signs in the drawings, and repetitive description thereof may be omitted in some cases.

### Battery Pack 100

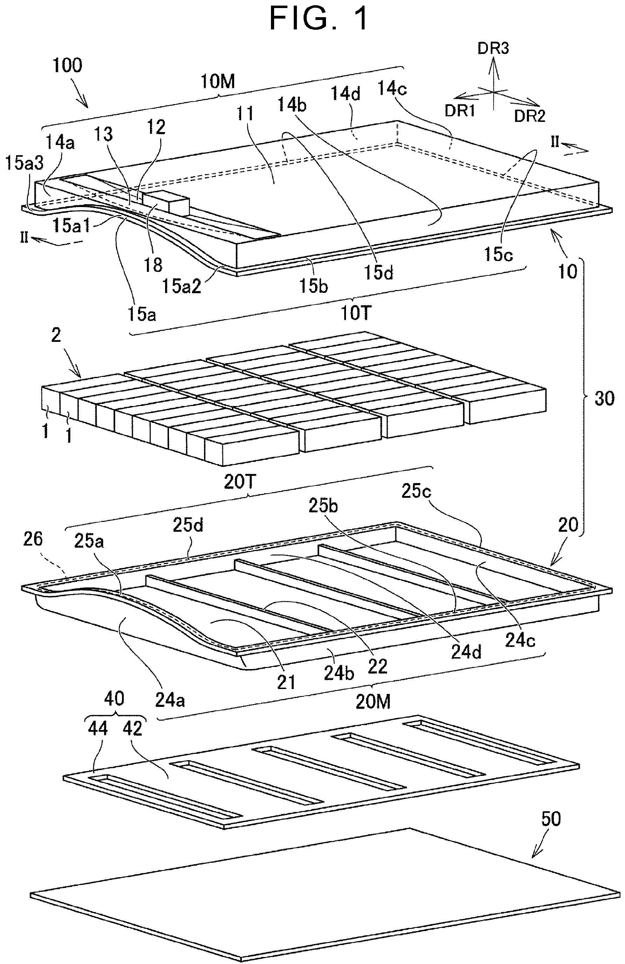

FIG. 1 is a disassembled perspective view illustrating a battery pack 100 according to the embodiment. The battery pack 100 according to the embodiment will be described with reference to FIG. 1. The battery pack 100 is installed in, for example, a hybrid electric vehicle capable of traveling under the power of at least one of an electric motor and an engine, or an electrified vehicle that travels under driving force obtained from electric energy.

The battery pack 100 includes a plurality of battery stacks 2, a housing case 30, a cooler 40, and a shared panel 50. The housing case 30 is made up of an upper case 10 and a lower case 20, and a sealing material 26 is disposed between the upper case 10 and the lower case 20. The sealing material 26 extends in an annular form between the upper case 10 and the lower case 20. The sealing material 26 is schematically illustrated by dashed lines in FIG. 1, for the sake of convenience of illustration.

### Battery Stack 2

The battery stacks 2 are arrayed side by side in a first direction DR1. Each of the battery stacks 2 extends in a second direction DR2 (orthogonal direction). The second direction DR2 is a direction orthogonal to the first direction DR1. Further, a third direction DR3 is a direction orthogonal to the first direction DR1 and the second direction DR2. In the present disclosure, a direction from a loading portion 21 of the lower case 20 toward a facing portion 11 of the upper case 10 in the third direction DR3 is referred to as a height direction, and a perpendicular position from the loading portion 21 is referred to as a height position.

Each of the battery stacks 2 is fixed to the loading portion 21 of the lower case 20 (second main body portion 20M) by an adhesive layer that is omitted from illustration. The adhesive layer is made up of a resin member that has thermal conductivity, for example. Examples of materials that can be used as the adhesive layer include an adhesive containing silicone resin, acrylic resin, epoxy resin, or the like. The adhesive layer is formed by curing these adhesives.

Now, when considering installing the battery pack 100 in the vehicle, the first direction DR1 can be made to correspond to a direction of the vehicle traveling forward or a direction of the vehicle traveling backward, and the second direction DR2 can be made to correspond to a vehicle width direction. The third direction DR3 that is orthogonal to the first direction DR1 and the second direction DR2 can be made to correspond to a vertical direction, for example. When the third direction corresponds to the vertical direction, the height position becomes higher when the direction is vertically upward, and the height position becomes lower when the direction is vertically downward.

Each of the battery stacks 2 includes a plurality of battery cells 1. The battery cells 1 are each a secondary battery such as a nickel metal hydride battery or a lithium-ion battery, for example. The secondary battery has, for example, a square form. The secondary battery may use a liquid electrolyte or may use a solid electrolyte. The battery cell 1 may be a unit capacitor configured to be capable of storing electricity.

### Housing Case 30

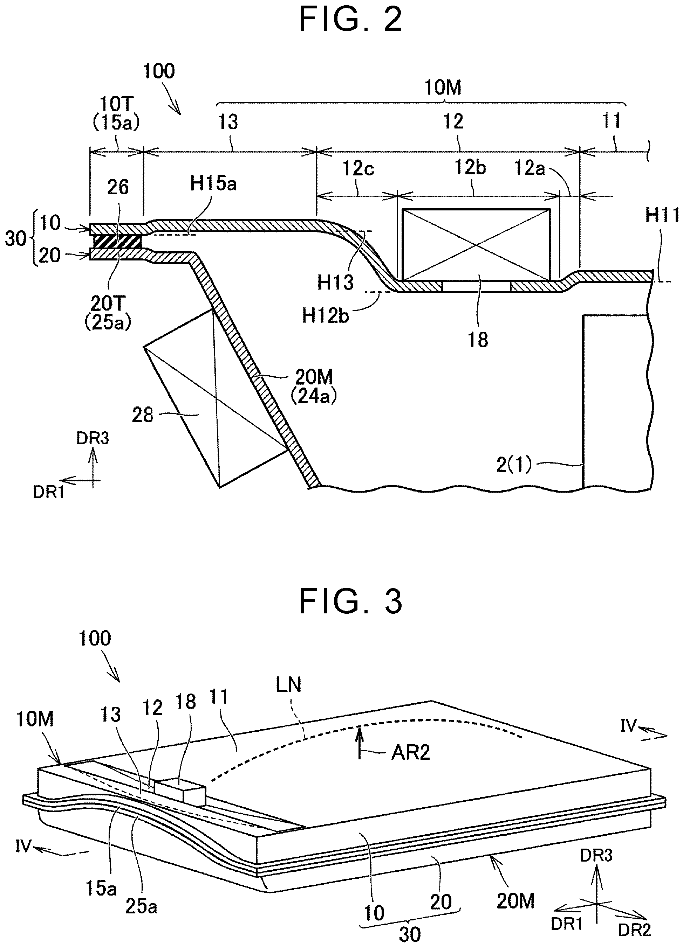

The housing case 30 accommodates the battery stacks 2. The housing case 30 includes the upper case 10 and the lower case 20. FIG. 2 is a cross-sectional view illustrating the battery pack 100, illustrating a cross-sectional structure of the battery pack 100 at a position taken along line II-II in FIG. 1. An internal space for accommodating the battery stacks 2 is defined by a first main body portion 10M of the upper case 10 and the second main body portion 20M of the lower case 20, which will be described later in detail. Upper Case 10

As illustrated in FIGS. 1 and 2, the upper case 10 includes the first main body portion 10M and a mating portion 10T. The first main body portion 10M has the facing portion 11, a constricting portion 12, a non-facing portion 13, and side walls 14a, 14b, 14c, and 14d, as components thereof. The mating portion 10T has flange portions 15a, 15b, 15c, and 15d, as components thereof.

The facing portion 11, the constricting portion 12, and the non-facing portion 13 of the first main body portion 10M make up a top plate portion in the upper case 10, and the side walls 14a, 14b, 14c, and 14d make up a peripheral wall portion in the upper case 10. The first main body portion 10M has a substantially box-like form that opens downward, made up of the facing portion 11, the constricting portion 12, the non-facing portion 13, and the side walls 14a, 14b, 14c, and 14d.

The facing portion 11 has a substantially plate-like form. The facing portion 11 is disposed upward from the battery stack 2, and faces the battery stack 2 from above. An outline of the facing portion 11 is overlaid on an outline of the battery stacks 2 as viewed from above. The facing portion 11 may be formed with ribs, beads, or the like (all omitted from illustration) for increasing the rigidity of the facing portion 11, extending along the second direction DR2. Multiple ribs or the like can be provided on the facing portion 11, arrayed in the first direction DR1 with spacings therebetween.

The constricting portion 12 is provided on a positive-direction side of the facing portion 11 in the first direction DR1. The non-facing portion 13 is provided on the positive-direction side of the constricting portion 12 in the first direction DR1. The constricting portion 12 has a band-like form extending along the second direction DR2. The constricting portion 12 is formed with a part of the top plate portion of the first main body portion 10M recessed downward (in a direction toward the lower case 20), and is formed with the height position of the constricting portion 12 in the vertical direction being lower than the height positions of the facing portion 11 and the non-facing portion 13 in the vertical direction, which will be described in detail later.

In the present embodiment (see FIG. 2), the constricting portion 12 has an inner inclined portion 12a, a bottom portion 12b, and an outer inclined portion 12c. The inner inclined portion 12a is provided so as to connect to the facing portion 11, and is inclined so that the height position thereof gradually decreases as the distance from the facing portion 11 increases in the positive direction along the first direction DR1. The outer inclined portion 12c is provided so as to be connected to the non-facing portion 13, and is inclined so that the height position thereof gradually decreases as the distance from the non-facing portion 13 increases in a negative direction along the first direction DR1. The bottom portion 12b is provided between the inner inclined portion 12a and the outer inclined portion 12c.

The battery pack 100 may further include a pressure release valve 18 provided above the constricting portion 12. The pressure release valve 18 is placed on the bottom portion 12b, for example. The pressure release valve 18 opens when the pressure in the internal space of the housing case 30 exceeds a predetermined value.

The non-facing portion 13 is provided on the positive-direction side of the constricting portion 12 in the first direction DR1. The non-facing portion 13 is provided on the opposite side from the facing portion 11 across the constricting portion 12. That is to say, in the first direction DR1, the constricting portion 12 is provided at a position between the facing portion 11 and the non-facing portion 13. Like the constricting portion 12, the non-facing portion 13 also has a band-like form extending along the second direction DR2.

The height position of the non-facing portion 13 is higher than that of the battery stack 2, but the non-facing portion 13 is not located above the battery stack 2, and the non-facing portion 13 is provided at a position that does not face the battery stack 2 from above. An outline of the non-facing portion 13 is not overlaid on the outline of the battery stacks 2 as viewed from above.

The height position of the non-facing portion 13 is defined as a height position H13 (FIG. 2) of a lower face of the non-facing portion 13 in the vertical direction, and the height position of the facing portion 11 is defined as a height position H11 (FIG. 2) of a lower face of the facing portion 11 in the vertical direction. In this case, the constricting portion 12 is provided such that the height position of the constricting portion 12 in the vertical direction is lower than the height position H13 and also lower than the height position H11.

Now, a height position H12b of a lower face of the bottom portion 12b of the constricting portion 12 is lower than the height position H13 and also lower than the height position H11. The height position H13 of the non-facing portion 13 is set to be higher than the height position H11 of the facing portion 11.

As illustrated in FIG. 1, the side walls 14a, 14b, 14c, and 14d of the first main body portion 10M are disposed surrounding the periphery of the top plate portion (facing portion 11, constricting portion 12, and non-facing portion 13) of the first main body portion 10M, in an annular form, extending downward from the periphery of the top plate portion.

The side wall 14a and the side wall 14c face each other across a spacing in the first direction DR1, and both extend in parallel to the second direction DR2. The side wall 14b and the side wall 14d face each other across a spacing in the second direction DR2, and both extend in parallel to the first direction DR1.

The flange portions 15a, 15b, 15c, and 15d of the mating portion 10T are respectively provided on the side walls 14a, 14b, 14c, and 14d of the first main body portion 10M. The flange portions 15a, 15b, 15c, and 15d are annular in form as a whole, with each having a form extending from the inner side of the first main body portion 10M toward the outer side thereof, in a lateral direction.

More specifically, the flange portion 15a (first flange portion) extends from a lower end of the side wall 14a in the positive direction along the first direction DR1, and the flange portion 15c extends from a lower end of the side wall 14c in the negative direction along the first direction DR1. Similarly, the flange portion 15b extends from a lower end of the side wall 14b in the positive direction along the second direction DR2, and the flange portion 15d extends from a lower end of the side wall 14d in the negative direction along the second direction DR2. The flange portion 15a is formed with a portion 15a1 at the middle thereof being curved upward in a convex form, and the flange portions 15b, 15c, and 15d have substantially plate-like forms.

Regarding the positional relationship between the non-facing portion 13 and the flange portion 15a (first flange portion), the non-facing portion 13 is located on the side of the facing portion 11 with respect to the position of the flange portion 15a in the first direction DR1, and is provided at a position not facing the battery stack 2. Further, regarding the positional relationship among the facing portion 11, the constricting portion 12, and the non-facing portion 13, the constricting portion 12 is provided at a position between the facing portion 11 and the non-facing portion 13 in the first direction DR1, and the constricting portion 12 is formed such that the height position thereof in the vertical direction is lower than the height positions of the facing portion 11 and the non-facing portion 13 in the vertical direction.

Further, in the present embodiment, a height position H15a (FIG. 2) of the flange portion 15a (first flange portion) is set to be higher than the height position H11 of the facing portion 11. Moreover, as illustrated in FIG. 1, the flange portion 15a has a form that extends along the second direction DR2 (orthogonal direction) which is a direction that is orthogonal to the first direction DR1, and the portion 15a1 located at the middle of the flange portion 15a in the second direction DR2 is provided at a higher position than portions 15a2 and 15a3 located on outer sides (both end sides) of the flange portion 15a in the second direction DR2. Further, regarding the flange portion 15b (third flange portion) of the first main body portion 10M, the portion 15a1 located at the middle of the flange portion 15a (first flange portion) is provided at a higher position than the flange portion 15b (third flange portion).

### Lower case 20

The lower case 20 includes the second main body portion 20M and a mating portion 20T. The second main body portion 20M is a member that defines the internal space for accommodating the battery stacks 2, together with the first main body portion 10M of the upper case 10. The second main body portion 20M has the loading portion 21, partition members 22, and side walls 24a, 24b, 24c, and 24d as components thereof. The mating portion 20T has flange portions 25a, 25b, 25c, and 25d, as the components thereof.

The loading portion 21 of the second main body portion 20M makes up a bottom plate portion in the lower case 20, and the side walls 24a, 24b, 24c, and 24d make up the a peripheral wall portion in the lower case 20. The second main body portion 20M has a substantially box-like form that opens upward, made up of the loading portion 21 and the side walls 24a, 24b, 24c, and 24d.

The loading portion 21 has a substantially plate-like form. A front face of the loading portion 21 is provided so as to be substantially flat. The front face of the loading portion 21 is sectioned into multiple section regions in the first direction DR1 by multiple partition members 22. Each of the battery stacks 2 is disposed inside a respective one of the section regions formed by the partition members 22. The loading portion 21 is located below the battery stacks 2 and supports the battery stacks 2 from below via the adhesive layer that is omitted from illustration.

The side walls 24a, 24b, 24c, and 24d of the second main body portion 20M are disposed surrounding the periphery of the bottom plate portion (loading portion 21) of the second main body portion 20M, in an annular form, erected upward from the periphery of the loading portion 21. The side wall 24a and the side wall 24c face each other across a spacing in the first direction DR1, and both extend in parallel to the second direction DR2. The side wall 24b and the side wall 24d face each other across a spacing in the second direction DR2, and both extend in parallel to the first direction DR1.

As illustrated in FIG. 2, a junction box 28 may be provided on the side of the side wall 24a, on the positive-direction side in the first direction DR1. Disposing the junction box 28 at this position is not indispensable, and the junction box 28 may be provided at another position. The junction box 28 is not illustrated in FIG. 1 and is illustrated only in FIG. 2.

The flange portions 25a, 25b, 25c, and 25d of the mating portion 20T are respectively provided on the side walls 24a, 24b, 24c, and 24d of the second main body portion 20M. The flange portions 25a, 25b, 25c, and 25d are annular in form as a whole, with each having a form extending from the inner side of the second main body portion 20M toward the outer side, in the lateral direction.

More specifically, the flange portion 25a (second flange portion) extends from an upper end of the side wall 24a in the positive direction along the first direction DR1, and the flange portion 25c extends from an upper end of the side wall 24c in the negative direction along the first direction DR1. Similarly, the flange portion 25b extends from an upper end of the side wall 24b in the positive direction along the second direction DR2, and the flange portion 25d extends from an upper end of the side wall 24d in the negative direction along the second direction DR2.

### Sealing Material 26

As illustrated in FIGS. 1 and 2, the sealing material 26 is disposed between the upper case 10 and the lower case 20. The sealing material 26 has, for example, an annular form so as to correspond to the forms of the mating portion 10T of the upper case 10 and the mating portion 20T of the lower case 20. The sealing material 26 extends in an annular form between the upper case 10 and the lower case 20, and forms a sealing structure between the mating portions 10T and 20T.

That is to say, the sealing material 26 has a portion disposed between at least the flange portions 15a and 25a, and this portion in the sealing material 26 forms a sealing structure between the flange portions 15a and 25a (see FIG. 2). Part of the sealing material 26 is exposed into the internal space for accommodating the battery stacks 2, formed inside the housing case 30.

### Cooler 40

The cooler 40 (FIG. 1) is a device for cooling the battery stacks 2. The cooler 40 is disposed on the outer side of the housing case 30. The cooler 40 is disposed below the loading portion 21 of the lower case 20. The cooler 40 is made of a metal material such as aluminum. The cooler 40 includes a plurality of cooling portions 42 and a holding frame portion 44.

The cooling portions 42 are disposed arrayed across spacings in the first direction DR1. Each of the cooling portions 42 is disposed at a position facing the battery stack 2 across the loading portion 21. Coolant channels through which a coolant (water or the like) for cooling the battery stacks 2 flows are formed in the cooling portions 42. The holding frame portion 44 holds each cooling portion 42. The holding frame portion 44 is formed in an annular form surrounding the cooling portions 42.

In the present embodiment, the holding frame portion 44 is formed in a substantially rectangular form. Each cooling portion 42 is connected to the holding frame portion 44 at both ends in the second direction DR2. The loading portion 21 can be efficiently cooled by the cooling portions 42, and the battery stack 2 can be efficiently cooled via the adhesive layer that is omitted from illustration, disposed on the loading portion 21.

The bottom portions of the battery stacks 2 may have uneven portions due to the height positions of bottom face portions of the battery cells 1 shifting. Even in such a case, the adhesive layer can be deformed so as to conform to the uneven portions, by pressing the battery stacks 2 against the loading portion 21. Accordingly, the adhesive layer can be brought into close contact with the bottom portions of the battery stacks 2, and good thermal conductivity can be secured.

### Shared Panel 50

The shared panel 50 is disposed so as to cover the cooler 40 from below. The shared panel 50 protects the cooler 40. The shared panel 50 is made of a metal material. Effects and Advantages

As mentioned earlier, when short-circuiting or the like occurs in a battery cell 1, the battery cell 1 generates heat, and high-temperature gas is generated inside the battery cell 1. When the internal pressure of the battery cell 1 exceeds a predetermined threshold value, high-temperature gas is discharged from a release valve (omitted from illustration) of the battery cell 1. The gas raises the internal pressure of the housing case 30.

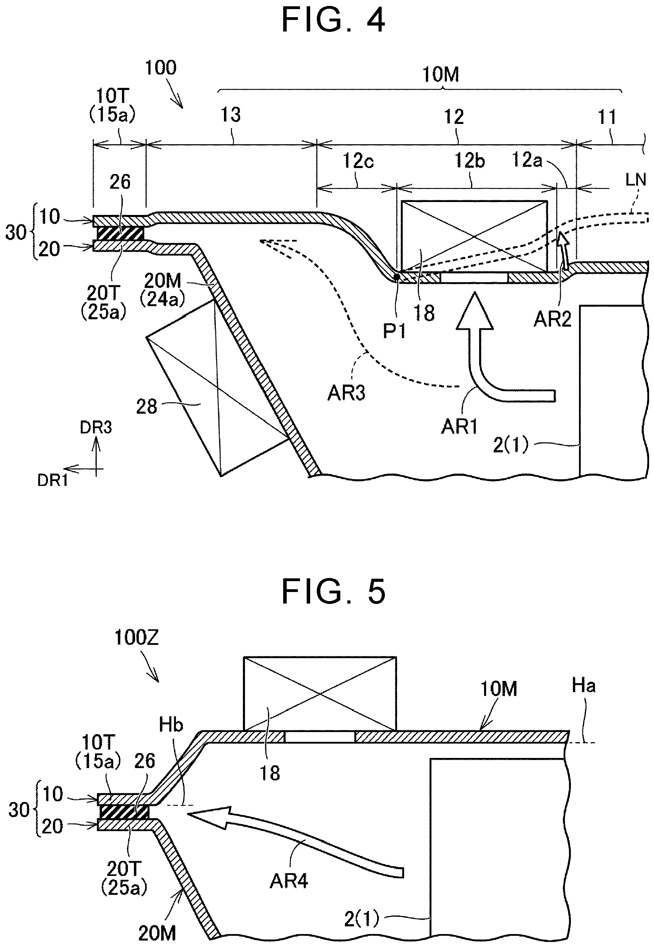

FIG. 3 is a diagram for describing a way in which deformation may occur in the upper case 10 under increase in internal pressure of the housing case 30. FIG. 4 is a cross-sectional view taken along line IV-IV in FIG. 3, as viewed from the direction of arrows.

The gas discharged from the battery cell 1 toward the internal space of the housing case 30 travels to spread around the battery cell 1. When the battery pack 100 is provided with the pressure release valve 18, the gas travels toward the pressure release valve 18 (see arrow AR1 in FIG. 4). Space around the pressure release valve 18 is exposed to high temperatures by the exhaust gas. Further, the gas tends to travel toward the sealing material 26 disposed between the upper case 10 and the lower case 20. When the high-temperature gas comes into contact with the sealing material 26, the sealing material 26 deteriorates, which in turn leads to the sealing capabilities of the sealing material 26 declining.

Conversely, in the present embodiment, the constricting portion 12 is formed with a part of the top plate portion of the first main body portion 10M recessed downward (in a direction toward the lower case 20), and is formed with the height position of the constricting portion 12 in the vertical direction being lower than the height positions of the facing portion 11 and the non-facing portion 13 in the vertical direction. For example, when viewing from the gas traveling in the positive direction along the first direction DR1 from the facing portion 11 toward the flange portion 15a, the internal space (channel cross-sectional area) becomes narrow below the constricting portion 12, and the internal space (channel cross-sectional area) becomes broad below the non-facing portion 13.

According to the above configuration, when high-temperature gas is discharged, the pressure strongly acts on the constricting portion 12 (particularly, the bottom portion 12b), and the upper case 10 is easily deformed with the first main body portion 10M expanding upward (see arrow AR2 in FIGS. 3 and 4), starting at a base PI of the constricting portion 12. Dashed line LN in FIGS. 3 and 4 schematically illustrates how the first main body portion 10M of the upper case 10 expands upward.

The pressure or energy of the gas discharged from the battery cell 1 is used to deform the first main body portion 10M (the facing portion 11 and the constricting portion 12 in particular) of the upper case 10 upward, and accordingly the gas is suppressed from traveling toward the sealing material 26 side, as indicated by arrow AR3 in FIG. 4. Consequently, deterioration of the sealing material 26 can be suppressed.

### Comparative Example

FIG. 5 is a cross-sectional view illustrating a battery pack 100Z according to a comparative example, and is a diagram for describing the inside of the housing case 30 when high-temperature gas is generated at a battery cell 1. In the case of the battery pack 100Z, the top plate portion of the first main body portion 10M of the upper case 10 is formed flat, and this flat portion broadly extends with a constant height, at a height position Ha of a portion located above the battery cell 1. No portion such as the constricting portion 12 in the above-described embodiment is formed on this flat portion. A height position Hb of the flange portion 15a is lower than the height position Ha.

When high-temperature gas is discharged, the pressure acts on the top plate portion of the first main body portion 10M, but the pressure or energy of the gas discharged from the battery cell 1 is only slightly used for deforming the first main body portion 10M of the upper case 10 upward, and the gas travels toward the sealing material 26 side as indicated by arrow AR4 in FIG. 5. As a result, the sealing material 26 deteriorates more easily than in the case of the above-described embodiment.

The embodiment disclosed herein is exemplary and not restrictive in all respects. The scope of the present disclosure is set forth by the claims and includes all modifications within the meaning and scope equivalent to those of the claims.

## Claims

1. A battery pack (100), comprising:
a battery stack (2) including a plurality of battery cells (1);
an upper case (10) including a first main body portion (10M) and a first flange portion (15a) extending from the first main body portion (10M) in a first direction (DR1);
a lower case (20) including a second main body portion (20M) that defines an internal space accommodating the battery stack (2) together with the first main body portion (10M), and a second flange portion (25a) that extends from the second main body portion (20M) in the first direction (DR1); and
sealing material (26) that is provided between the first flange portion (15a) and the second flange portion (25a), and that is included in a sealing structure between the first flange portion (15a) and the second flange portion (25a), wherein the first main body portion (10M) of the upper case (10) includes
a facing portion (11) that faces the battery stack (2) in a third direction (DR3) from the lower case (20) toward the upper case (10),
a non-facing portion (13) provided at a position that is on a side of the facing portion (11) with respect to a position of the first flange portion (15a) in the first direction (DR1) and that does not face the battery stack (2) in the third direction (DR3), and
a constricting portion (12) provided at a position between the facing portion (11) and the non-facing portion (13) in the first direction (DR1), a height position of the constricting portion (12) in the third direction (DR3) being lower than a height position of the facing portion (11) and a height position of the non-facing portion (13) in the third direction (DR3).

2. The battery pack (100) according to claim 1, wherein the constricting portion (12) includes
an inner inclined portion (12a) that connects to the facing portion (11) and that is inclined such that a height position of the inner inclined portion (12a) in the third direction (DR3) gradually decreases as a distance from the facing portion (11) increases in the first direction (DR1),
an outer inclined portion (12c) that connects to the non-facing portion (13) and that is inclined such that a height position of the outer inclined portion (12c) in the third direction (DR3) gradually decreases as a distance from the non-facing portion (13) increases in the first direction (DR1), and
a bottom portion (12b) provided between the inner inclined portion (12a) and the outer inclined portion (12c).

3. The battery pack (100) according to claim 2, wherein a height position of the bottom portion (12b) in the third direction (DR3) is lower than the height position of the facing portion (11) and the height position of the non-facing portion (13) in the third direction (DR3).

4. The battery pack (100) according to claim 2 or 3, further comprising a pressure release valve (18) provided on the bottom portion (12b), wherein the pressure release valve (18) is configured to open when a pressure in the internal space exceeds a predetermined value.

5. The battery pack (100) according to any one of claims 1 to 4, wherein the height position of the non-facing portion (13) in the third direction (DR3) is higher than the height position of the facing portion (11) in the third direction (DR3).

6. The battery pack (100) according to any one of claims 1 to 5, wherein a height position of the first flange portion (15a) in the third direction (DR3) is higher than the height position of the facing portion (11) in the third direction (DR3).

7. The battery pack (100) according to any one of claims 1 to 6, wherein:
the first flange portion (15a) extends along a second direction (DR2) orthogonal to the first direction (DR1); and
a height position in the third direction (DR3) of a part of the first flange portion (15a) at a middle position in the second direction (DR2) is higher than height positions in the third direction (DR3) of parts of the first flange portion (15a) at positions on both end sides in the second direction (DR2).

8. The battery pack (100) according to claim 7, wherein the second direction (DR2) is orthogonal to the third direction (DR3).

9. The battery pack (100) according to claim 7 or 8, wherein:
the upper case (10) further includes a third flange portion (15b) extending from the first main body portion (10M) in the second direction (DR2); and
the height position in the third direction (DR3) of the part of the first flange portion (15a) at the middle position is higher than a height position in the third direction (DR3) of the third flange portion (15b).

10. The battery pack (100) according to any one of claims 1 to 9, wherein the first direction (DR1) is orthogonal to the third direction (DR3).

11. The battery pack (100) according to any one of claims 1 to 10, wherein the third direction (DR3) is a vertical direction (DR3).
